# EUROPEAN PATENT SPECIFICATION

(11) **EP 2 925 853 B1**
(45) Date of publication and mention of the grant of the patent: **24.07.2019**
(21) Application number: 13857842.2
(22) Date of filing: 26.11.2013
(51) Int. Cl.: C12M 1/26, C12M 1/24, B01L 3/00, B01D 21/26, B01L 9/00

(54) **SYSTEM FOR COLLECTING A TARGET MATERIAL**
SYSTEM ZUM SAMMELN EINES ZIELMATERIALS
SYSTÈME COLLECTE D'UNE MATIÈRE CIBLE

(30) Priority: 30.11.2012 US 201261732029 P; 21.12.2012 US 201261745094 P; 15.03.2013 US 201361791883 P; 01.05.2013 US 201361818301 P; 26.08.2013 US 201361869866 P
(43) Date of publication of application: 07.10.2015
(73) Proprietor: Rarecyte, Inc., Seattle, WA 98121 (US)
(72) Inventor: CAMPTON, Daniel, Seattle, Washington 98121 (US); NORDBERG, Joshua, Bainbridge Island, Washington 98110 (US); QUARRE, Steve, Woodinville, Washington 98072 (US); STEWART, David, Seattle, Washington 98118 (US); SEUBERT, Ronald, Sammamish, Washington 98075 (US); LUNDT, Jonathan Erik, Missoula, Montana 59803 (US)
(74) Representative: J A Kemp
(86) International application number: PCT/US2013/072009
(87) International publication number: WO 2014/085456

(56) References cited:
- EP-A1- 0 744 026
- US-A- 3 932 277
- US-A- 4 187 861
- US-A- 5 030 341
- US-A- 5 560 830
- US-A1- 2005 014 273
- US-A1- 2009 129 973
- US-A1- 2010 317 106
- US-A1- 2012 223 027
- US-A1- 2012 258 531

## Description

### TECHNICAL FIELD

This disclosure relates generally to density-based fluid separation and, in particular, to retrieving a target material from a suspension.

### BACKGROUND

Suspensions often include materials of interest that are difficult to detect, extract and isolate for analysis. For instance, whole blood is a suspension of materials in a fluid. The materials include billions of red and white blood cells and platelets in a proteinaceous fluid called plasma. Whole blood is routinely examined for the presence of abnormal organisms or cells, such as ova, fetal cells, endothelial cells, parasites, bacteria, and inflammatory cells, and viruses, including HIV, cytomegalovirus, hepatitis C virus, and Epstein-Barr virus. Currently, practitioners, researchers, and those working with blood samples try to separate, isolate, and extract certain components of a peripheral blood sample for examination. Typical techniques used to analyze a blood sample include the steps of smearing a film of blood on a slide and staining the film in a way that enables certain components to be examined by bright field microscopy.

On the other hand, materials of interest that occur in a suspension with very low concentrations are especially difficult if not impossible to detect and analyze using many existing techniques. Consider, for instance, circulating tumor cells ("CTCs"), which are cancer cells that have detached from a tumor, circulate in the bloodstream, and may be regarded as seeds for subsequent growth of additional tumors (i.e., metastasis) in different tissues. The ability to accurately detect and analyze CTCs is
of particular interest to oncologists and cancer researchers. However, CTCs occur in very low numbers in peripheral whole blood samples. For instance, a 7.5 ml sample of peripheral whole blood that contains as few as 5 CTCs is considered clinically relevant for the diagnosis and treatment of a cancer patient. In other words, detecting 5 CTCs in a 7.5 ml blood sample is equivalent to detecting 1 CTC in a background of about 10 billion red and white blood cells, which is extremely time consuming, costly and difficult to accomplish using blood film analysis.

As a result, practitioners, researchers, and those working with suspensions continue to seek systems and methods for accurate analysis of suspensions for the presence or absence of rare materials of interest.

In US 2005/0014273 there is described a method of preparing an original sample of biological origin with a view to detecting at least one component contained in it, whereby the original sample is enclosed in a first container and at least a part of this original sample is transferred from the first container into at least one reaction container, a reagent or reagent mixture being placed beforehand in at least one of the reaction containers in order to prepare the original sample and the component to be detected. In order to transfer at least a part of the original sample, two respective containers are connected to one another to form a closed, airtight system at least until at least the component(s) to be detected has (have) been rendered stable by reacting it (them) with the reagent or reagent mixture at room temperature.

By contrast, in US 2009/0129973, there are described methods of producing collection tubes. The methods include providing a separator substance that can rapidly polymerize in a short time to a desired hardness and disposing the separator substance within the lumen of the tube. The separator substance is formulated to have a density between an average density of a serum fraction of whole blood and a cell-containing fraction of whole blood, and to be flowable with whole blood. Upon centrifugation of a tube having blood, the separator substance forms a barrier between the whole blood fractions. The tube and barrier maintain stability of one or more analyte levels, including potassium and glucose, within 10% of their initial values before centrifugation for at least four days.

US 2012/0223027 A1 describes a tube and float system configured to facilitate removal of certain non-target materials in order to further isolation and extraction of a target material.

### SUMMARY OF THE INVENTION

According to the present invention there is provided a system for retrieving a target material from a suspension in which the system comprises the features of claim 1.

### DESCRIPTION OF THE DRAWINGS

Figures 1A-1B show an example of a first design of collector.
Figures 1C-1D show an example of a second design of collector.
Figures 2A-2C show an example of a collector and processing vessel system.
Figures 3A-3B show an example of a first design of sealing ring.
Figures 3C-3D show an example of a second design of sealing ring.
Figures 3E-3F show an example of a third design of sealing ring.
Figure 3G shows an example of a fourth design of sealing ring.
Figure 4 shows a flow diagram of an example method for retrieving a target material.
Figures 5A-5B show examples of float and primary vessel systems.
Figure 6 shows an example of a float and primary vessel system having undergone density-based separation.
Figure 7A shows an example of a clamp with an example sealing ring and an example tube and float system.
Figure 7B shows the example sealing ring and the example float and primary vessel system of Figure 7A forming a seal.
Figures 8A-8B show an example system for retrieving a target material.

### DETAILED DESCRIPTION

The invention relates to a system for retrieving a target material from a suspension, as defined in claim 1. The system includes a processing vessel, such as an Eppendorf tube, a syringe or a test tube, and a collector. The collector is sized and shaped to fit into a primary vessel, such as a test tube. The collector funnels the target material from the suspension through a cannula and into the processing vessel. The collector may include a funnel at a second end in fluid communication with the cannula. The cannula extends into a chamber at a first end of the collector that holds the processing vessel. According to the invention, the processing vessel includes at least one displacement fluid. In another implementation, the processing vessel may include at least one displacement fluid and at least one processing solution. The collector expels at least one displacement fluid from the processing vessel, such that the at least one displacement fluid pushes the target material into the collector. The system further includes a float to be inserted within the primary vessel and a sealing ring to tighten around the primary vessel to create a seal between the float and the primary vessel.

### Collector

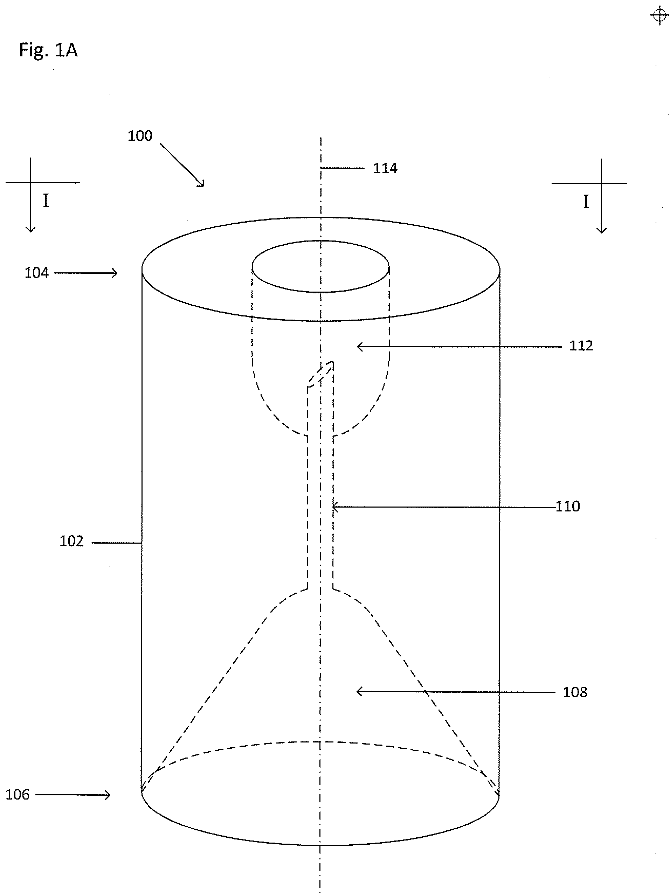

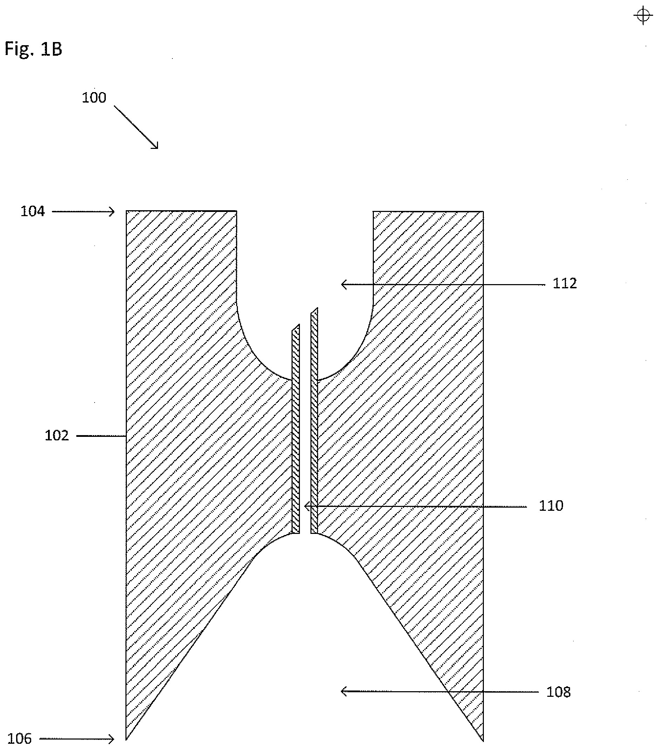

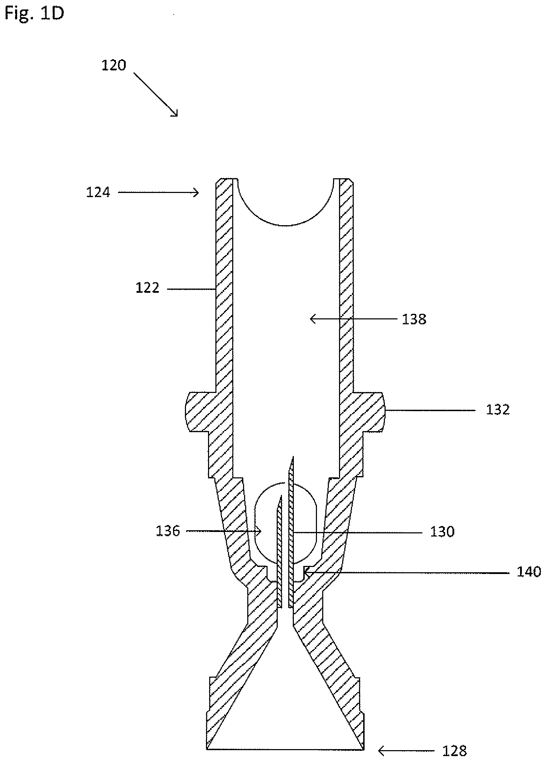

Figure 1A shows an isometric view of a collector 100. Figure IB shows a cross-section view of the collector 100 taken along the line I-I. Dot-dashed line 114 represents the central or highest-symmetry axis of the collector 100. The collector 100 is sized and shaped to fit within a primary vessel containing or capable of holding a suspension, the suspension suspected of including a target material. The collector 100 may engage in an interference or sealed fit with an inner wall of the primary vessel to inhibit any portion of the suspension from being located between the inner wall of the vessel and the outer wall of the collector 100. The collector 100 funnels the target material from the suspension through a cannula 110 and into a processing vessel (not shown) located within a chamber 112.

The collector 100 includes a primary body 102. The primary body 102 includes a first end 104 and a second end 106. The primary body 102 may be any appropriate shape, including, but not limited to, cylindrical, triangular, square, rectangular, or the like. The collector 100 also includes a funnel 108 which is a concave
cavity extending from the second end 106 into the primary body 102. The funnel 108 channels a target material from below the second end 106 into a cannula 110 which is connected to and in fluid communication with an apex of the funnel 108. The apex of the funnel 108 has a smaller diameter than the mouth of the funnel 108. The funnel 108 is formed by a tapered wall that may be straight, curvilinear, arcuate, or the like.

The cannula 110, such as a tube or a needle, including, but not limited to a non-coring needle, extends from the apex of the funnel 108 and into the chamber 112. The chamber 112 is a cavity to accept and support the processing vessel (not shown). The chamber 112 may be threaded to engage a threaded portion of the processing vessel (not shown). The cannula 110 may extend any appropriate distance into the chamber 112 in order to puncture or be inserted into the processing vessel (not shown). The cannula 112 may include a flat tip or a tapered tip. The chamber 112 is a concave cavity extending from the first end 104 into the primary body 102. The chamber 112 may be any appropriate depth to accept and support the processing vessel (not shown). Furthermore, the chamber 112 may be any appropriate shape, including, but not limited to, semi-spherical, conical, pyramidal, or the like.

The collector 100 may also include a retainer (not shown) to prevent the collector 100 from sliding relative to the primary vessel, thereby keeping the collector 100 at a pre-determined height within the primary vessel. The retainer (not shown) may be a shoulder extending radially from the first end 104, a clip, a circular protrusion that extends beyond the circumference of the cylindrical primary body 102, a detent, or the like.

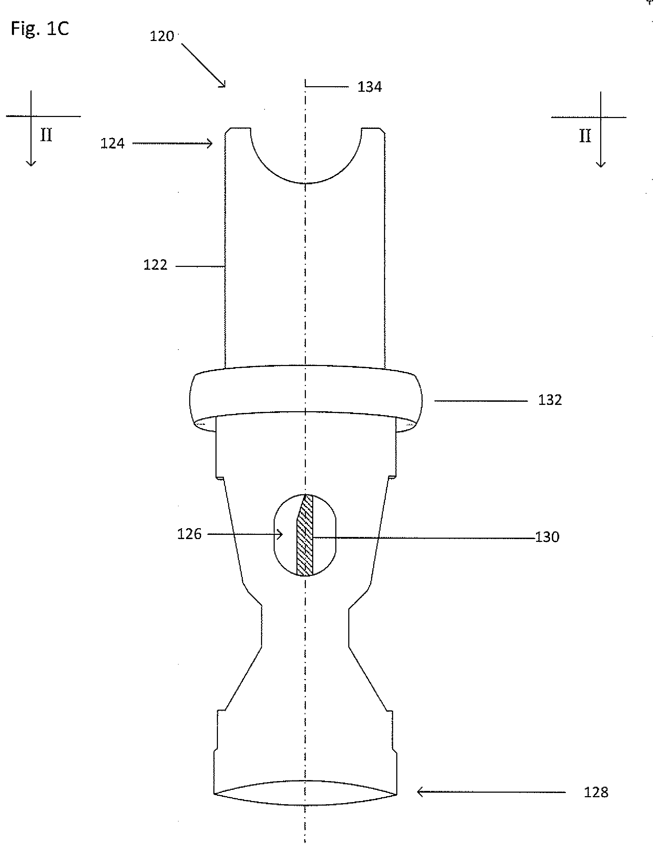

Figure 1C shows an isometric view of a collector 120. Figure ID shows a cross-section view of the collector 120 taken along the line II-II. Dot-dashed line 134 represents the central or highest-symmetry axis of the collector 120. The collector 120 is similar to the collector 100, except that the collector 120 includes a window 126, a ridge 132, and a primary body 122 to accommodate a greater portion of the processing vessel (not shown). Comparing the collector 100 shown in Figures 1A-1B with the collector 120 shown in Figures 1C-1D, the primary body 122 is longer than the primary body 102. The window 126 permits an operator to confirm proper placement and chambering of the processing vessel (not shown) within the collector 120. The collector 120 includes a cavity 138 dimensioned to accept and hold at least a portion of the processing vessel (not shown). The cavity 138 may have a tapered or stepped bottom end 140 to act as a chamber on which the processing vessel (not shown) may rest. The first end 124 may include cut-outs to permit proper grip of the processing vessel (not shown) for insertion and removal. A second end 128 forms an interference or sealed fit with the primary vessel to prevent fluid from flowing around the collector 120. The collector 120 also includes a ridge 132, which extends circumferentially around the primary body 122. The ridge 132 may be larger than the inner diameter of the primary vessel so as to rest on the open end of the primary vessel so that, upon application of a lock ring (not shown) to the outside of the primary vessel and the ridge 132, movement of the collector 120 relative to the primary vessel may be inhibited. The lock ring (not shown) applies pressure to the primary vessel along the ridge 132. The lock ring may be a two-piece ring, a one piece ring wrapping around the full circumference of the primary vessel, or a one piece ring wrapping around less than the full circumference of the primary vessel, such as one-half (1/2), five-eighths (5/8), two-thirds (2/3), three-quarters (3/4), seven-eighths (7/8), or the like. Alternatively, the ridge 132 may fit within the primary vessel.

The primary body can be composed of a variety of different materials including, but not limited to, a ceramic; metals; organic or inorganic materials; and plastic materials, such as polyoxymethylene ("Delrin®"), polystyrene, acrylonitrile butadiene styrene ("ABS") copolymers, aromatic polycarbonates, aromatic polyesters, carboxymethylcellulose, ethyl cellulose, ethylene vinyl acetate copolymers, nylon, polyacetals, polyacetates, polyacrylonitrile and other nitrile resins, polyacrylonitrile- vinyl chloride copolymer, polyamides, aromatic polyamides ("aramids"), polyamide-imide, polyarylates, polyarylene oxides, polyarylene sulfides, polyarylsulfones, polybenzimidazole, polybutylene terephthalate, polycarbonates, polyester, polyester imides, polyether sulfones, polyetherimides, polyetherketones, polyetheretherketones, polyethylene terephthalate, polyimides, polymethacrylate, polyolefins (e.g., polyethylene, polypropylene), polyallomers, polyoxadiazole, polyparaxylene, polyphenylene oxides (PPO), modified PPOs, polystyrene, polysulfone, fluorine containing polymer such as polytetrafluoroethylene, polyurethane, polyvinyl acetate, polyvinyl alcohol, polyvinyl halides such as polyvinyl chloride, polyvinyl chloride-vinyl acetate copolymer, polyvinyl
pyrrolidone, polyvinylidene chloride, specialty polymers, polystyrene, polycarbonate, polypropylene, acrylonitrite butadiene-styrene copolymer, butyl rubber, ethylene propylene diene monomer; and combinations thereof.

The cannula can be composed of a variety of different materials including, but not limited to, a ceramic; metals; organic or inorganic materials; and plastic materials, such as a polypropylene, acrylic, polycarbonate, or the like; and combinations thereof. The cannula may have a tip along a longitudinal axis of the cannula.

### Collector and Processing Vessel System

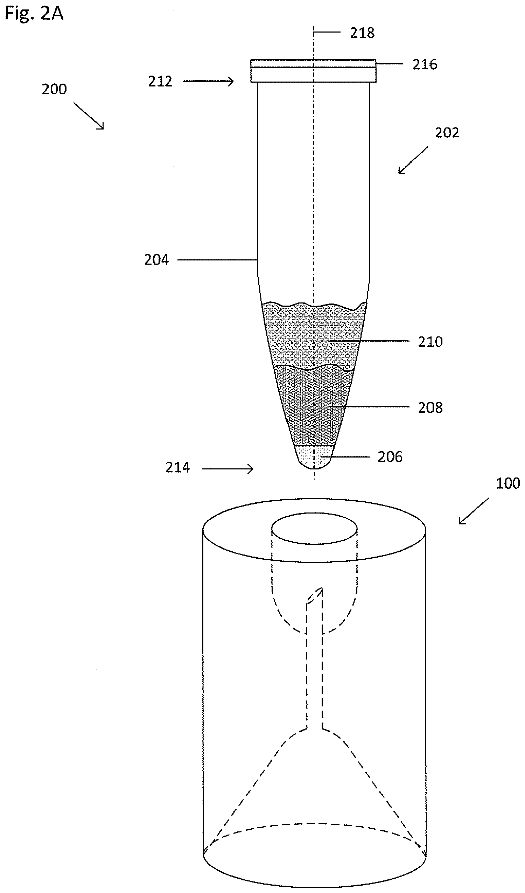

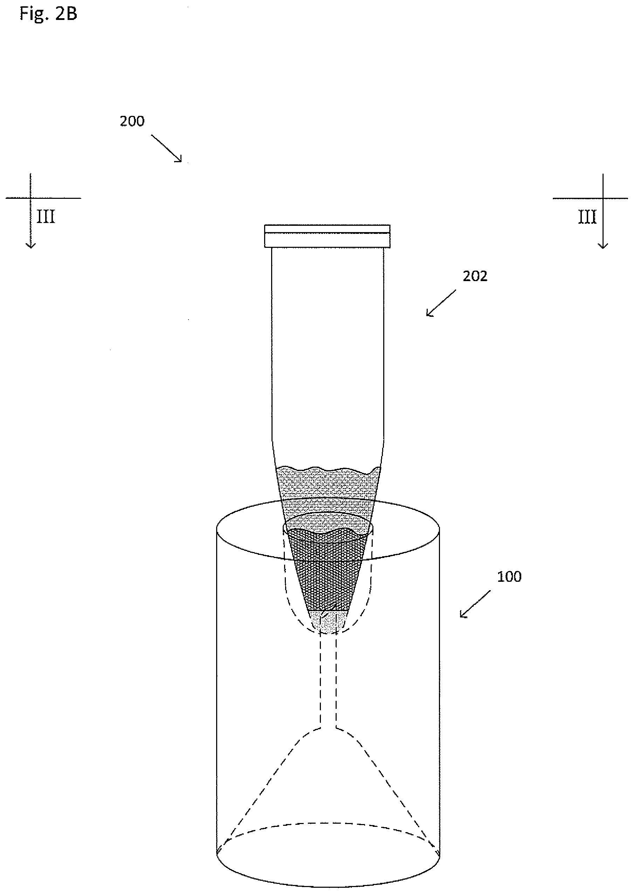

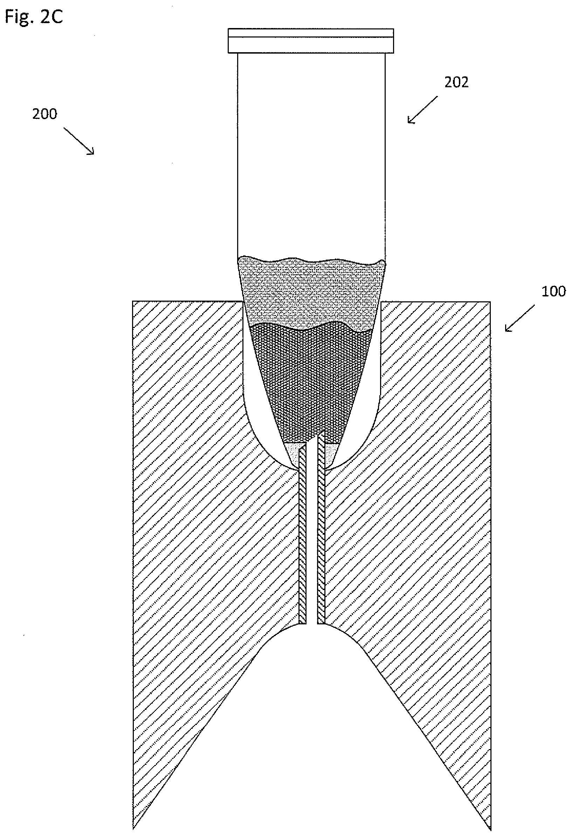

Figure 2A shows an exploded view of the example collector 100 and processing vessel 202. Figure 2B shows an isometric view of the example processing vessel inserted into the chamber 112 of the collector 100. Figure 2C shows a cross-sectional view of the processing vessel inserted into the chamber 112 of the collector 100 and processing vessel 202 taken along the line III-III. The collector 100 and processing vessel 202 form a collector and processing vessel system 200. The processing vessel 202 may be an Eppendorf tube, a syringe, or a test tube and has a closed end 214 and an open end 212. The open end 212 is sized to receive a cap 216. The cap 216 may be composed of re-sealable rubber or other suitable re-sealable material that can be repeatedly punctured with a needle or other sharp implement to access the contents stored in the processing vessel 202 interior and re-seals when the needle or implement is removed. Alternatively, the processing vessel 202 may have two open ends that are sized to receive caps. The processing vessel 202 may have a tapered geometry that widens or narrows toward the open end 212; the processing vessel 202 may have a generally cylindrical geometry; or, the processing vessel 202 may have a generally cylindrical geometry in a first segment and a cone-shaped geometry in a second segment, where the first and second segments are connected and continuous with each other. Although at least one segment of the processing vessel 202 has a circular cross-section, in other arrangements, the at least one segment can have elliptical, square, triangular, rectangular, octagonal, or any other suitable cross-sectional shape. The processing vessel 202 can be composed of a transparent, semitransparent, opaque, or translucent material, such as plastic or another suitable material. The processing vessel includes a central axis
218. The processing vessel 202 may also include a plug 206 at the closed end 214 to permit the introduction of the target material or to exchange the target material with a displacement fluid. The closed end 214 may be threaded to provide for a threaded connection with a threaded chamber 112 of the collector 100. The processing vessel 202 may be composed of glass, plastic, or other suitable material.

The plug 206 may be composed of re-sealable rubber or other suitable re- sealable material that can be repeatedly punctured with a needle or other sharp implement to access the contents of the processing vessel 202 interior or permit introduction of contents into the processing vessel 202 and re-seals when the needle or implement is removed. The plug 206 can be formed in the closed end 214 of the processing vessel 202 using heated liquid rubber that can be shaped and hardens as the rubber cools. The adhesive used to attach a plug to the wall can be a polymer-based adhesive, an epoxy, a contact adhesive or any other suitable material for bonding or creating a thermal bond. Alternatively, the plug 206 may be injected into the processing vessel 202.

When the cannula 110 includes a tapered tip, a portion of the tapered tip may extend into an inner cavity of the processing vessel 202, whereas another portion of the tapered tip does not enter the inner cavity of the processing vessel 202. The inner cavity of the processing vessel 202 is the portion of the processing vessel 202 to hold the suspension. The cannula 110 may be covered by a resealable sleeve (not shown) to prevent the target material from flowing out unless the processing vessel 202 is in the chamber 112 and is inserted to a depth appropriate enough for the cannula 110 to penetrate the processing vessel 202. The resealable sleeve (not shown) covers the cannula 110, is spring-resilient, can be penetrated by the cannula 110, and is made of an elastomeric material capable of withstanding repeated punctures while still maintaining a seal.

The processing vessel 202 may be loaded with a displacement fluid 208 prior to introduction to the collector 100. The displacement fluid 208 displaces the target material, such that when the collector 100 and processing vessel 202 are inserted into a primary vessel (not shown) and the target material, the collector, the processing vessel, and the primary vessel undergo centrifugation, the displacement fluid 208 flows out of the processing vessel 202 and into the primary vessel, and, through displacement, pushes the target material into the funnel 108, through the cannula 110, and into the processing vessel 202.

The displacement fluid 208 has a greater density than the density of the target material of the suspension (the density may be less than the density of at least one other suspension fraction or the density may be greater than all of the suspension fractions) and is inert with respect to the suspension materials. The displacement fluid 208 may be miscible or immiscible in the suspension fluid. Examples of suitable displacement fluids include, but are not limited to, Percoll, Ficoll, an organic solvent, a liquid wax, an oil, a gas, and combinations thereof; olive oil, mineral oil, silicone oil, chill-out liquid wax, paraffin wax, microcrystalline waxes, soy and palm waxes, candle waxes, thermoset waxes, hot melt adhesives, atactic polypropylene and polyolefin compounds, petroleum waxes, dental waxes, animal waxes, vegetable waxes, mineral waxes, petroleum waxes, and synthetic waxes, such as ethylenic polymers, chlorinated naphthalenes or hydrocarbon-type waxes; immersion oil, mineral oil, paraffin oil, silicon oil, fluorosilicone, perfluorodecalin, perfluoroperhydrophenanthrene, perfluorooctylbromide, and combinations thereof; organic solvents such as 1,4-Dioxane, acetonitrile, ethyl acetate, tert-butanol, cyclohexanone, methylene chloride, tert-Amyl alcohol, tert-Butyl methyl ether, butyl acetate, hexanol, nitrobenzene, toluene, octanol, octane, propylene carbonate, tetramethylene sulfones, and ionic liquids; perfluoroketones, such as perfluorocyclopentanone and perfluorocyclohexanone, fluorinated ketones, hydrofluoroethers, hydrofluorocarbons, perfluorocarbons, perfluoropolyethers, silicon and silicon-based liquids, such as phenylmethyl siloxane.

The density of the displacement fluid 208 may be static (remaining constant) or dynamic (changing in response to certain conditions). These conditions include, but are not limited to, pressure and temperature.

The processing vessel 202 may also include a processing solution 210 to effect a transformation on the target material when the target material enters the processing vessel 202. The processing solution 210 may be a preservative, a cell adhesion solution, a dye, or the like. Unlike the displacement fluid 208, most, if not all, of the processing solution 210 remains within the processing vessel 202 upon centrifugation, thereby effecting the transformation on the target material in one manner or another (i.e. preserving, increasing adhesion properties, or the like). The processing solution 210 may be introduced as a liquid or as a liquid container in a casing. The casing may be dissolvable in an aqueous solution but not in the displacement fluid 208 (such as gel cap); or, the casing may be breakable, such that the casing breaks when the processing vessel 210 is shaken in a vortex mixer. Additionally, more than one processing solution may be used.

The processing vessel 202 may include a flexible cap that can be pushed to dispense a pre-determined volume therefrom and onto a substrate. The cap 216 may be flexible or the cap 216 may be removed and the flexible cap inserted into the open end 212. Alternatively, the processing vessel 202 may be attached to (i.e. after accumulating the target material) or may include a dispenser, which is capable of dispensing a pre-determined volume of target material from the processing vessel 202 onto a substrate, such as a microscope slide. The dispenser may repeatedly puncture the re-sealable cap 216 or compress the material within the processing vessel 202 to withdraw and dispense the pre-determined volume of target material onto the substrate. Alternatively, the cap 216 may be removed and the dispenser (not shown) may be inserted directly into the processing vessel 202 to dispense the Buffy coat-processing solution mixture.

### Sealing Ring

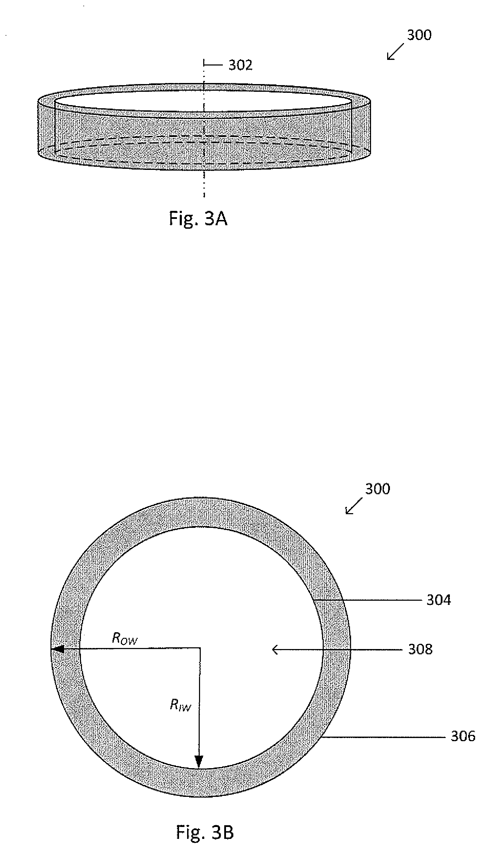

Figure 3A shows an isometric view of a sealing ring 300. Figure 3B shows a top down view of the sealing ring 300. Dot-dashed line 302 represents the central or highest-symmetry axis of the sealing ring 300. The sealing ring 300 includes an inner wall 304, an outer wall 306, and a cavity 308. In Figure 3B, *R_{JW}* represents the radial distance from the center of the sealing ring 300 to the inner wall 304, and *R*_{OW} represents the radial distance from the center of the sealing ring 300 to the outer wall 306. The sealing ring 300 is configured to fit around a vessel, such as a tube. The cavity 308 is sized and shaped to receive the vessel. The sealing ring 300 may be tightened, such that the size of the cavity 308 and the radii of the inner and outer walls 304 and 306 are reduced by circumferentially applying an approximately uniform, radial force, such as the radial force created by a clamp, around the outer wall 306 directed to the central axis 302
of the sealing ring 300. When the sealing ring 300 is tightened around the vessel, the uniform force applied to the sealing ring 300 is applied to the vessel, thereby causing the vessel to constrict. When the radial force is removed from the sealing ring 300, the sealing ring 300 remains tightened and in tension around the vessel, thereby causing the vessel to remain in the constricted state.

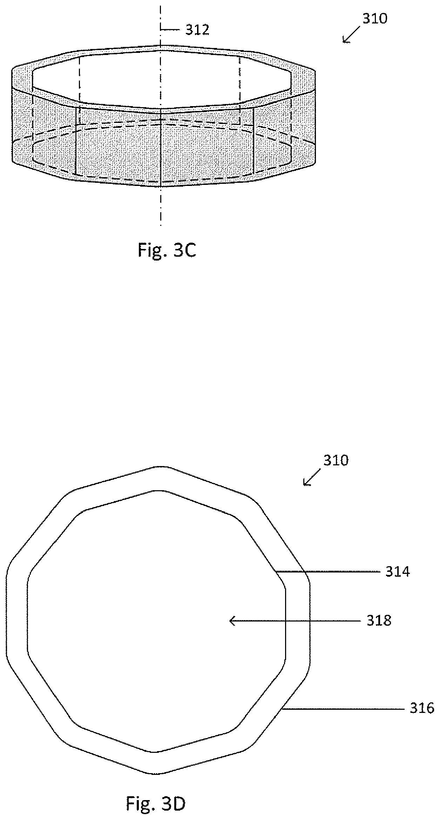

The sealing ring may be any shape, including, but not limited to, circular, triangular, or polyhedral. Figure 3C shows an isometric view of a sealing ring 310. Figure 3D shows a top down view of the sealing ring 310. Sealing ring 310 is similar to sealing ring 300, except sealing ring 310 is polyhedral. Dot-dashed line 312 represents the central or highest-symmetry axis of the sealing ring 310. The sealing ring 310 includes an inner wall 314, an outer wall 316, and a cavity 318. The sealing ring may be composed of a metal, such as brass, a polymer, or combinations thereof.

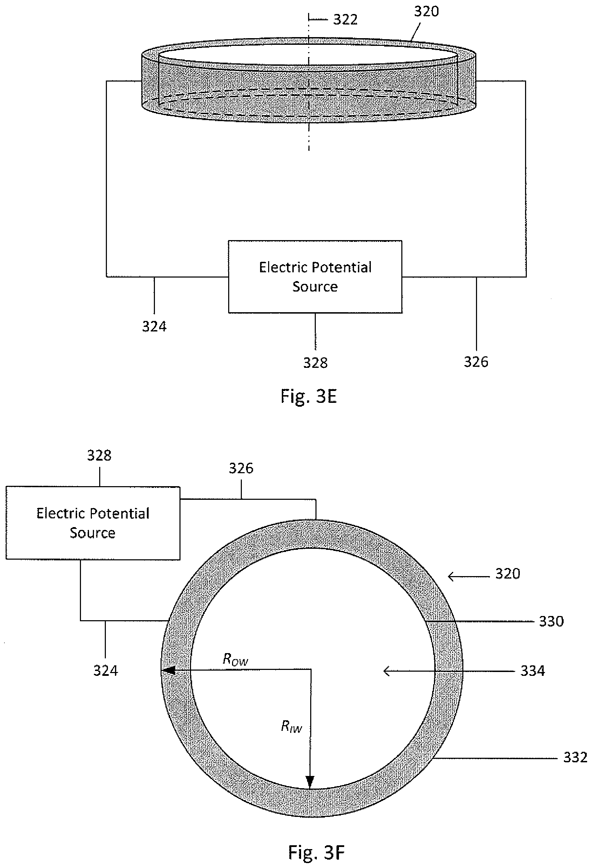

Alternatively, as shown in Figure 3E, a sealing ring 320 may be composed of a piezoelectric material. Dot-dashed line 322 represents the central or highest-symmetry axis of the sealing ring 320. The sealing ring 320 may be connected to an electric potential source 328, such as a battery, via a first lead 324 and a second lead 326. The electric potential source 328 creates an electric potential that when applied to the sealing ring 320 produces a mechanical strain that causes the sealing ring 320 to tighten (i.e. sealing ring 320 tightens when an electric potential is applied). Figure 3F shows a top down view of the sealing ring 320. The sealing ring 320 includes an inner wall 330, an outer wall 332, and a cavity 334. In Figure 3F, R_{/*W*} represents the radial distance from the center of the sealing ring 320 to the inner wall 330, and R*_{OW}* represents the radial distance from the center of the sealing ring 320 to the outer wall 332. When the sealing ring 320 is composed of piezoelectric material, a clamp is not required, because the mechanical strain causes the sealing ring 320 to tighten without applying an external force, except for the requisite electric potential. Alternatively, the sealing ring 320 may be in a naturally tightened state. When applying the electric potential the sealing ring 320 expands. Alternatively, a portion of the sealing ring may be composed of the piezoelectric material, such that the piezoelectric portion acts as an actuator to cause the other portion of the sealing ring to tighten and apply the substantially uniform circumferential pressure on the tube, thereby constricting the tube to form the seal.

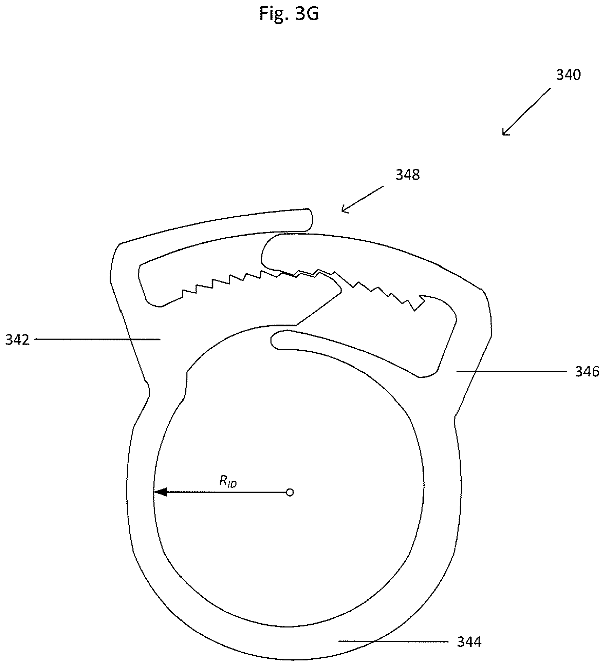

Figure 3G shows an isometric view of a sealing ring 340. The sealing ring includes an adjustment mechanism 348 to adjust the inner diameter R_{ID}. The collapsible ring includes a first end 342 and a second end 346, the first and second ends 342 and 346 being joined by a band portion 344. The first and second ends 342 and 346 include complementary portions of the adjustment mechanism 348. The adjustment mechanism 348 includes, but is not limited to, a ratchet, tongue and groove, detents, or the like.

The sealing ring may also include a thermal element, such as a heated wire. The thermal element may soften the vessel for constriction. Alternatively, the thermal element may melt the vessel to provide a more adherent seal. Alternatively, the thermal element may cause the sealing ring to compress, thereby forming a seal between the tube and float.

### Method

For the sake of convenience, methods are described with reference to an example suspension of anticoagulated whole blood. But the methods described below are not intended to be so limited in their scope of application. The methods, in practice, can be used with any kind of suspension. For example, a sample suspension can be urine, blood, bone marrow, cystic fluid, ascites fluid, stool, semen, cerebrospinal fluid, nipple aspirate fluid, saliva, amniotic fluid, vaginal secretions, mucus membrane secretions, aqueous humor, vitreous humor, vomit, and any other physiological fluid or semi-solid. It should also be understood that a target material can be a fraction of a sample suspension, such as Buffy coat, a cell, such as ova, a fetal nucleated red blood cell, or a circulating tumor cell ("CTC"), a circulating endothelial cell, a fetal cell, a vesicle, a liposome, a protein, a nucleic acid, a biological molecule, a naturally occurring or artificially prepared microscopic unit having an enclosed membrane, parasites, microorganisms, viruses, or inflammatory cells.

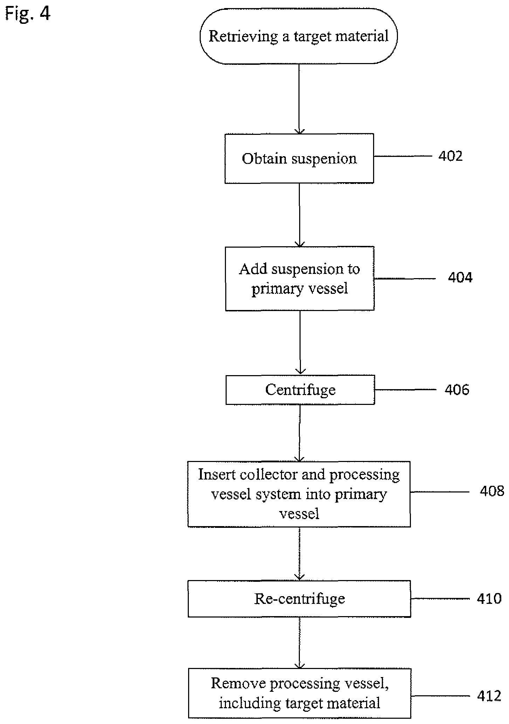

Figure 4 shows a flow diagram for an example method for retrieving a target material. In block 402, a suspension, such as anticoagulated whole blood, is obtained. In block 404, the whole blood is added to a primary vessel, such as a test tube. A float may also be added to the primary vessel. A seal may be formed between the float and the primary vessel. For the sake of convenience, the methods are described with reference to the float and the seal. But the methods described below are not intended to be so limited in their application and may be performed without the float and/or the seal.

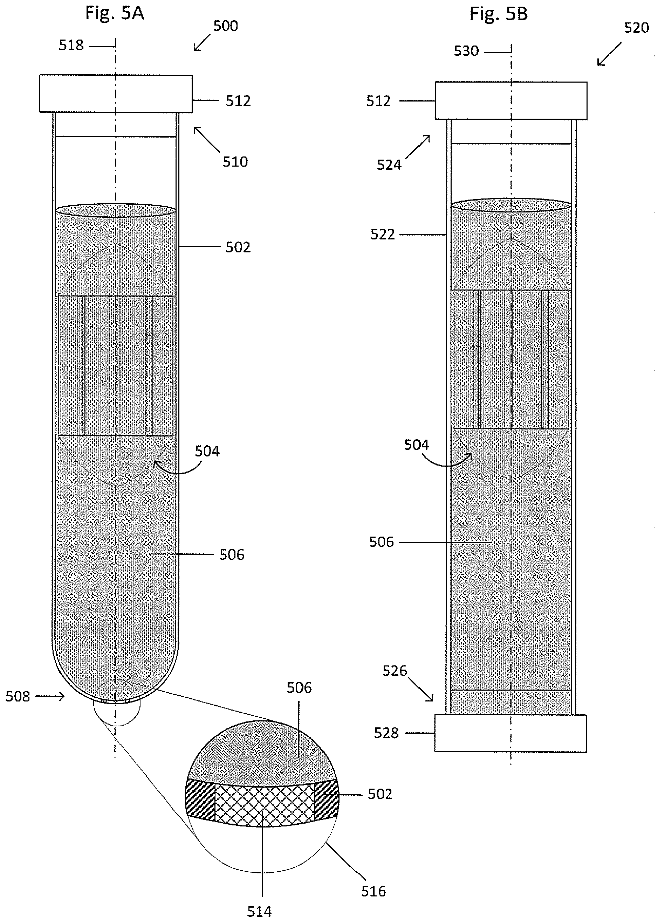

Figure 5A shows an isometric view of an example primary vessel and float system 500. The system 500 includes a primary vessel 502 and a float 504 suspended within whole blood 506. In the example of Figure 5A, the primary vessel 502 has a circular cross-section, a first closed end 508, and a second open end 510. The open end 510 is sized to receive a cap 512. The primary vessel may also have two open ends that are sized to receive caps, such as the example tube and separable float system 520 shown in Figure 5B. The system 520 is similar to the system 500 except the primary vessel 502 is replaced by a primary vessel 522 that includes two open ends 524 and 526 configured to receive the cap 512 and a cap 528, respectively. The primary vessels 502 and 522 have a generally cylindrical geometry, but may also have a tapered geometry that widens, narrows, or a combination thereof toward the open ends 510 and 524, respectively. Although the primary vessels 502 and 522 have a circular cross-section, in other embodiments, the primary vessels 502 and 522 can have elliptical, square, triangular, rectangular, octagonal, or any other suitable cross-sectional shape that substantially extends the length of the tube. The primary vessels 502 and 522 can be composed of a transparent, semitransparent, opaque, or translucent material, such as plastic or another suitable material. The primary vessels 502 and 522 each include a central axis 518 and 530, respectively. The primary vessel 502 may also include a septum 514, as seen in magnified view 516, at the closed end 508 to permit the removal of a fluid, the suspension, or a suspension fraction, whether with a syringe, a pump, by draining, or the like. The primary vessel 502 may have a sidewall and a first diameter.

The septum 514 may be composed of re-sealable rubber or other suitable resealable material that can be repeatedly punctured with a needle or other sharp implement to access the contents of the primary vessel 502 interior and re-seals when the needle or implement is removed. The septum 514 can be formed in the openings and/or the bottom interior of the tube using heated liquid rubber that can be shaped and hardens as the rubber cools. The adhesive used to attach the septum 514 to the wall of the opening and tube interior can be a polymer-based adhesive, an epoxy, a contact
adhesive or any other suitable material for bonding rubber to plastic or creating a thermal bond.

Figures 5A-5B show the float 504. The float 504 includes a main body, two teardrop-shaped end caps, and support members radially spaced and axially oriented on the main body. The float 504 can also include two dome-shaped end caps or two cone-shaped end caps or any appropriately-shaped end cap. The support members may engage the inner wall of the primary vessel 502. Alternatively, the float 504 may not include any support members. Alternatively, the float 504 may include support members which do not engage the inner wall of the primary vessel 502.

In alternative arrangements, the number of support members, support member spacing, and support member thickness can each be independently varied. The support members can also be broken or segmented. The main body is sized to have an outer diameter that is less than the inner diameter of the primary vessel 502, thereby defining fluid retention channels between the outer surface of the main body and the inner wall of the primary vessel 502. The surfaces of the main body between the support members can be flat, curved or have another suitable geometry. The support members and the main body may be a singular structure or may be separate structures.

Other arrangements include other types of geometric shapes for float end caps. The top end cap may be teardrop-shaped, dome-shaped, cone-shaped, or any other appropriate shape. The bottom end cap may be teardrop-shaped, dome-shaped, cone-shaped, or any other appropriate shape. In other arrangements, the main body of the float 504 can include a variety of different support structures for separating samples, supporting the tube wall, or directing the suspension fluid around the float during centrifugation. The possible arrangements are not intended to be limited to these examples. The main body may include a number of protrusions that provide support for the tube. In alternative arrangements, the number and pattern of protrusions can be varied. The main body may include a single continuous helical structure or ridge that spirals around the main body creating a helical channel. In other arrangements, the helical ridge can be rounded or broken or segmented to allow fluid to flow between adjacent turns of the helical ridge. In various arrangements, the helical ridge spacing and rib thickness can be independently varied. In another arrangement, the main body may include a support
member extending radially from and circumferentially around the main body. In another arrangement, the support members may be tapered.

The float 504 can be composed of a variety of different materials including, but not limited to, metals; organic or inorganic materials; ferrous plastics; sintered metal; machined metal; plastic materials and combinations thereof. The primary vessel 502 may have a sidewall and a first diameter. The float 504 can be captured within the primary vessel 502 by an interference fit, such that under centrifugation, a sidewall of the tube expands to permit axial movement of the float 504. When centrifugation stops, the sidewall reduces back to the first diameter to induce the interference fit. Alternatively, the sidewall may not expand and the interference fit may not occur between the float 504 and the primary vessel 502, such that the float moves freely within the tube before, during, or after centrifugation.

The cap may be composed of a variety of different materials including, but not limited to, organic or inorganic materials; plastic materials; and combination thereof.

The end caps of the float may be manufactured as a portion of the main body, thereby being one singular structure, by machining, injection molding, additive techniques, or the like; or, the end caps may be connected to the main body by a press fit, an adhesive, a screw, any other appropriate method by which to hold at least two pieces together, or combinations thereof.

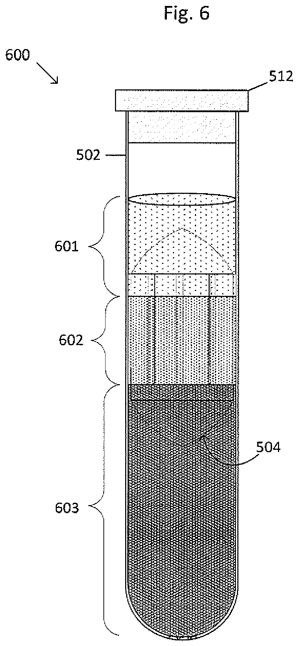

Returning to Figure 4, in block 406, the primary vessel and the whole blood undergo density-based separation, such as by centrifugation, thereby permitting separation of the whole blood into density-based fractions along an axial position in the tube based on density. Figure 6 shows an isometric view of the primary vessel and float system 500 having undergone density-based separation, such as by centrifugation. Suppose, for example, the whole blood includes three fractions. For convenience sake, the three fractions include plasma, Buffy coat, and red blood cells. However, when another suspension undergoes centrifugation, there may be more than, less than, or the same number of fractions, each fraction having a different density. The suspension separates into three fractions along an axial position in the tube based on density, with red blood cells 603 located on the bottom, plasma 601 located on top, and Buffy coat 602 located in between. The float 504 may have any appropriate density to settle within one
of the fractions. The density of the float 504 can be selected so that the float 504 settles at the same axial position as the Buffy coat 602. The Buffy coat 602 can be trapped within an area between the float 504 and the primary vessel 402.

Delineation fluids (not shown) may also be used to cause further separation between the target material and any non-target material above and/or below the target material, for example, to further separate the Buffy coat 602 and the plasma 601 and the Buffy coat 602 and the red blood cells 603. The delineation fluid (not shown) may have a density greater than or less than the target material. For example, when it is desirous to further separate the Buffy coat 602 and the red blood cells 603, the delineation fluid may have a density greater than the Buffy coat 602 and less than the red blood cells 603. The delineation fluid (not shown) may be miscible or immiscible with the suspension fluid and inert with respect to the suspension materials. The density of the delineation fluid (not shown) may be static (e.g. remaining constant) or dynamic (e.g. changing based on outside or environmental conditions, including pressure or temperature). The delineation fluid (not shown) may also provide an area in which to seal the tube, as there is greater delineation and separation between the Buffy coat 602 and the red blood cells 603. The delineation fluid (not shown) may be used whether or not a float is used. Additionally, more than one delineation fluid may be used. Examples of suitable delineation fluids include, but are not limited to, Percoll, Ficoll, an organic solvent, a liquid wax, an oil, a gas, and combinations thereof; olive oil, mineral oil, silicone oil, chill-out liquid wax, paraffin wax, microcrystalline waxes, soy and palm waxes, candle waxes, thermoset waxes, hot melt adhesives, atactic polypropylene and polyolefin compounds, petroleum waxes, dental waxes, animal waxes, vegetable waxes, mineral waxes, petroleum waxes, and synthetic waxes, such as ethylenic polymers, chlorinated naphthalenes or hydrocarbon-type waxes; immersion oil, mineral oil, paraffin oil, silicon oil, fluorosilicone, perfluorodecalin, perfluoroperhydrophenanthrene, perfluorooctylbromide, and combinations thereof; organic solvents such as 1,4-Dioxane, acetonitrile, ethyl acetate, tert-butanol, cyclohexanone, methylene chloride, tert-Amyl alcohol, tert-Butyl methyl ether, butyl acetate, hexanol, nitrobenzene, toluene, octanol, octane, propylene carbonate, tetramethylene sulfones, and ionic liquids; perfluoroketones, such as perfluorocycloentanone and perfluorocyclohexanone, fluorinated ketones, hydrofluoroethers, hydrofluorocarbons, perfluorocarbons, perfluoropolyethers, silicon and silicon-based liquids, such as phenylmethyl siloxane.

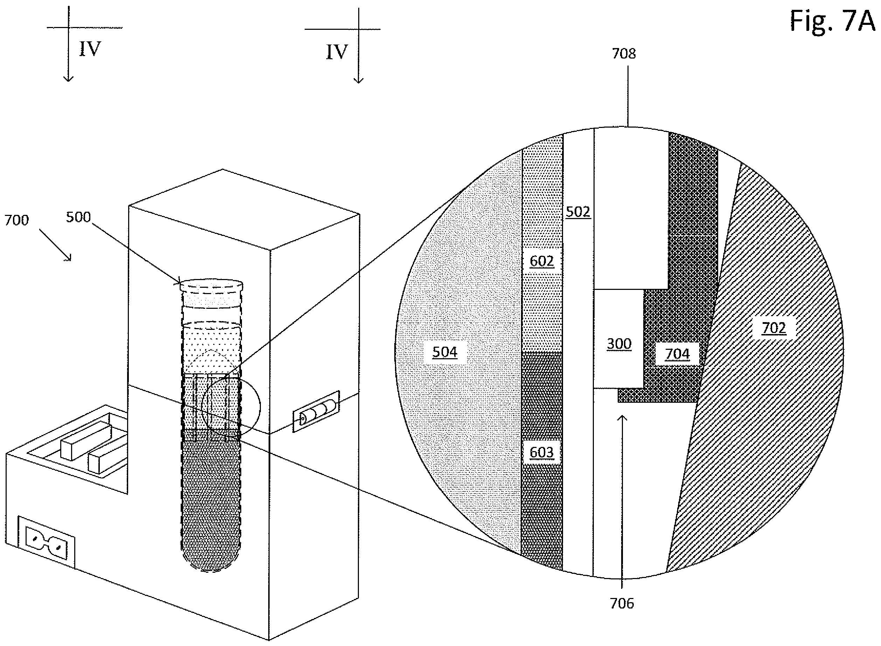

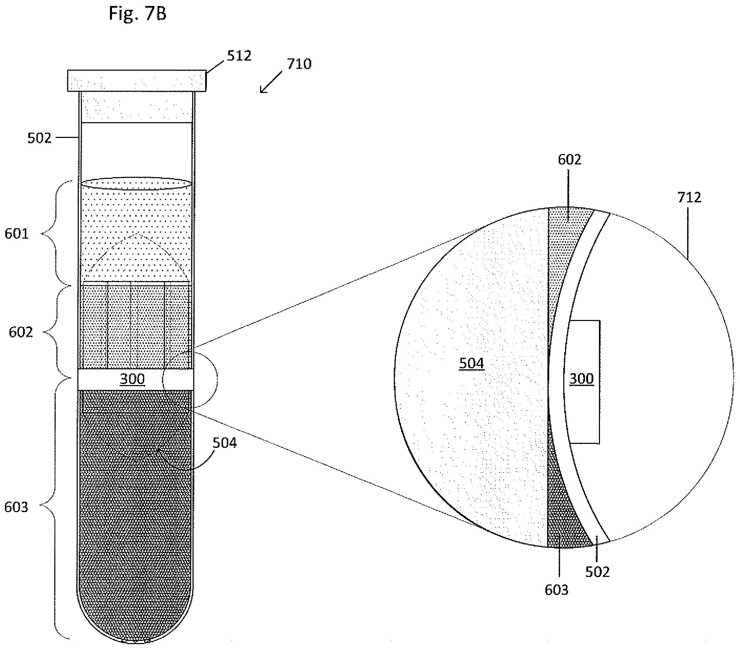

A seal may be created at least on the primary vessel, after centrifugation, when it is desirous to do so, such as between a float and the primary vessel when the float is used in the primary vessel. The seal prevents fluids from moving past the seal in any direction within the primary vessel. The seal also inhibits float movement. For example, Figure 7A shows an isometric view of a clamp 700 with the float and primary vessel system 500. The clamp 700 is configured to circumferentially apply a force directed toward the central axis of the primary vessel 502 to the sealing ring 300 and the float and primary vessel system 500. The circumferential or radial force causes the sealing ring 300 to tighten, thereby causing the primary vessel 502 to collapse inwardly and constrict against the float 504, as shown in Figure 7B. The clamp 700 may also include a thermal element, such as a heated wire, to soften the primary vessel 502. Alternatively, the clamp 700 may form a seal between the float 504 and primary vessel 502 without the inclusion of the sealing ring 300. Alternatively, a seal may be formed between the float 504 and the primary vessel 502 such as by ultrasonic welding; or by applying heat or a temperature gradient to deform and/or melt the primary vessel 502 to the float 504.

Magnified view 708 shows a cross-section view along the line IV-IV of the inside the clamp 700 prior to the circumferential application of the force. The sealing ring 300 is placed around the float and primary vessel system 500 after the tube and float system have undergone density-based separation, such as by centrifugation. The sealing ring 300 and float and primary vessel system 500 are then placed into the clamp 700. The clamp 700 may include a shelf 706 to support the sealing ring 300 against the primary vessel 502. Operation of the clamp 700 may be automated or may be performed manually.

When operation of the clamp 700 is automated, as seen in Figure 7A, a motor (not shown) causes translation of either a collet (not shown), including collet fingers 704, or a pressure member 702 to cause compression of the collet fingers 704. The motor may be connected to the collet (not shown) or the pressure member 702 by a shaft, such as a cam shaft, and one or more gears. A base (not shown) engages and holds the object. When the collet (not shown) is driven by the motor, the pressure member 702
remains stationary. When the pressure member 702 is driven by the motor, the collet (not shown) remains stationary. The clamp 700 may include a release, so as to cause the pressure member 702 to slide off the collet fingers 704, thereby removing the clamping force.

Alternatively, the clamp may be, but is not limited to, a collet clamp, an O-ring, a pipe clamp, a hose clamp, a spring clamp, a strap clamp, or a tie, such as a zip tie. The clamp may be used without a sealing ring to provide a seal between a float and a tube.

Figure 7B shows a sealed system 710. Magnified view 712 shows the sealing ring 300 tightened around the float and primary vessel system 500. The sealing ring 300, having been placed at an interface of the Buffy coat 602 and the red blood cells 603, causes the primary vessel 502 to collapse inwardly until a seal is formed between the primary vessel 502 and the float 504. An outer wall of the sealing ring 300 may sit flush with an outer wall of the primary vessel 502; the outer wall of the sealing ring 300 may extend past the outer wall of the primary vessel 502; or, the outer wall of the primary vessel 502 may extend past the outer wall of the sealing ring 300. The sealing ring 300 remains tightened and in tension to maintain the seal. The seal prevents fluids from moving past the seal in any direction. Alternatively, the sealing ring 300 may be overtightened and then the force applied to the sealing ring 300 is removed. The sealing ring 300 may expand slightly, though still remains in tension and constricted.

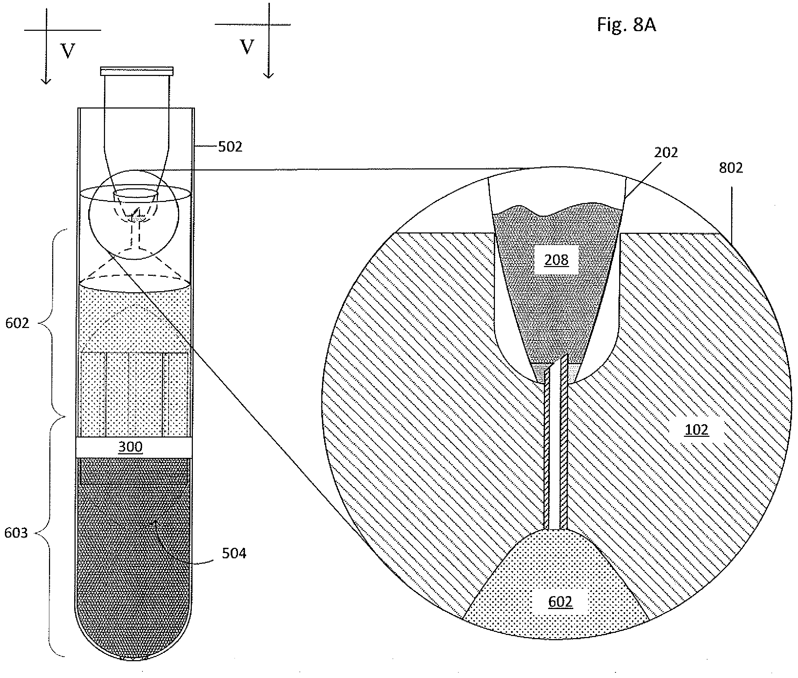

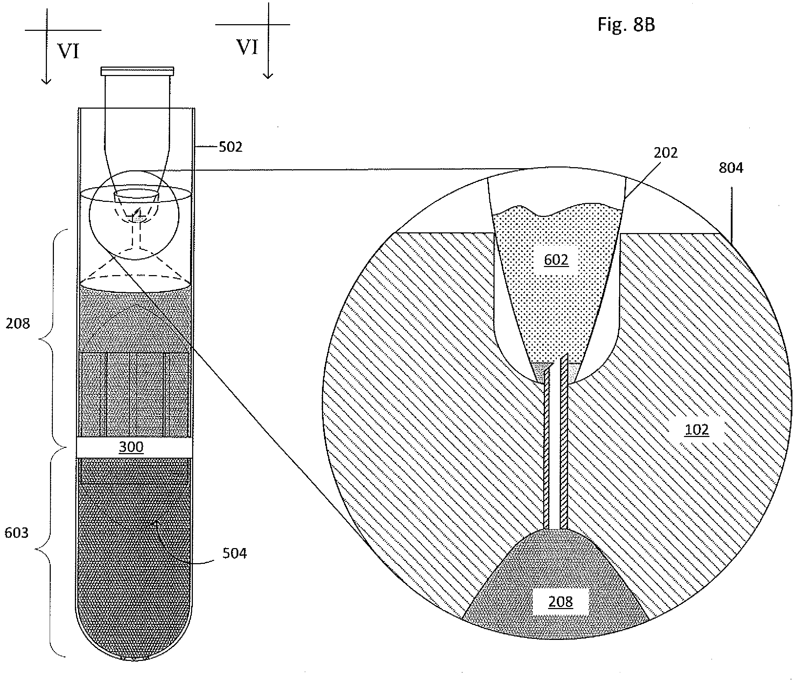

The plasma 601 shown in Figure 7B is removed from the vessel, such as by pipetting, suctioning, pouring, or the like. Returning to Figure 4, in block 408, a collector and processing vessel system is then added to the primary vessel. In block 410, the system is then re-centrifuged. Figure 8A shows the collector and processing vessel system 200, as seen in Figures 2A-2C, inserted into the primary vessel 502. Magnified view 802, which is a cross-section view taken along the line V-V, shows the displacement fluid 208 within the processing vessel 202 and the Buffy coat 602 within the primary vessel 502. Figure 8B shows the collector 100, the processing vessel 202, and the primary vessel 502 after having been re-centrifuged. The displacement fluid 208 from the processing vessel 202, having a density greater than the Buffy coat 602, displaces the Buffy coat 602, thereby causing the Buffy coat 602 to move upwards within
the primary vessel 502 during re-centrifugation and into the funnel 108 of the collector 100, into and through the cannula 1 10, and into the processing vessel 202. Magnified view 804, which is a cross-section view taken along the line VI-VI, shows the exchange of the Buffy coat 602 and the displacement fluid 208. Additionally, more than one displacement fluid may be used. Alternatively, more than one processing vessel may be used, such that each processing vessel includes a different displacement fluid to displace different fractions or materials of the suspension into the respective processing vessel. Consecutive fractions may be removed from the primary vessel by displacing the respective fractions with the respective displacement fluids. For example, a first processing vessel may include a first displacement fluid to displace the plasma into the first processing vessel. A second processing vessel may include a second displacement fluid to displace the Buffy coat into the second processing vessel; the second processing vessel may also include the processing solution to effect a change on the Buffy coat.

Returning to Figure 4, in block 412, the processing vessel 202 may then be removed from the collector 100.

After removal, the processing vessel 202 may be shaken, such as by a vortex mixer. The processing solution 210, having been added before shaking either in liquid form, in a dissolvable casing, or in a breakable casing, may then mix with the Buffy coat 602 to effect a transformation and form a Buffy coat-processing solution mixture. The Buffy coat-processing solution mixture may then be dispensed onto a substrate, such as a microscope slide.

The target material may be analyzed using any appropriate analysis method or technique, though more specifically extracellular and intracellular analysis including intracellular protein labeling; chromogenic staining; nucleic acid analysis, including, but not limited to, DNA arrays, expression arrays, protein arrays, and DNA hybridization arrays; in situ hybridization ("ISH"-a tool for analyzing DNA and/or RNA, such as gene copy number changes); polymerase chain reaction ("PCR"); reverse transcription PCR; or branched DNA ("bDNA"-a tool for analyzing DNA and/or RNA, such as mRNA expression levels) analysis. These techniques may require fixation, permeabilization, and isolation of the target material prior to analysis. Some of the intracellular proteins which may be labeled include, but are not limited to, cytokeratin ("CK"), actin, Arp2/3, coronin, dystrophin, FtsZ, myosin, spectrin, tubulin, collagen, cathepsin D, ALDH, PBGD, Akt1, Akt2, c-myc, caspases, survivin, p27^{kip}, FOXC2, BRAF, Phospho-Aktl and 2, Phospho-Erk1/2, Erk1/2, P38 MAPK, Vimentin, ER, PgR, PI3K, pFAK, KRAS, ALKH1, Twist1, Snail1, ZEB1, Fibronectin, Slug, Ki-67, M30, MAGEA3, phosphorylated receptor kinases, modified histones, chromatin-associated proteins, and MAGE. To fix, permeabilize, or label, fixing agents (such as formaldehyde, formalin, methanol, acetone, paraformaldehyde, or glutaraldehyde), detergents (such as saponin, polyoxyethylene, digitonin, octyl β-glucoside, octyl β-thioglucoside, 1-S-octyl-β-D-thioglucopyranoside, polysorbate-20, CHAPS, CHAPSO, (1,1,3,3-Tetramethylbutyl)phenyl-polyethylene glycol or octylphenol ethylene oxide), or labeling agents (such as fluorescently-labeled antibodies, enzyme-conjugated antibodies, Pap stain, Giemsa stain, or hematoxylin and eosin stain) may be used.

A solution containing a fluorescent probe may be used to label the target material, thereby providing a fluorescent signal for identification and characterization. The solution containing the fluorescent probe may be added to the suspension before the suspension is added to the vessel, after the suspension is added to the vessel but before centrifugation, or after the suspension has undergone centrifugation. The fluorescent probe includes a fluorescent molecule bound to a ligand. The target material may have a number of different types of surface markers. Each type of surface marker is a molecule, such an antigen, capable of attaching a particular ligand, such as an antibody. As a result, ligands can be used to classify the target material and determine the specific type of target materials present in the suspension by conjugating ligands that attach to particular surface markers with a particular fluorescent molecule. Examples of suitable fluorescent molecules include, but are not limited to, quantum dots; commercially available dyes, such as fluorescein, FITC ("fluorescein isothiocyanate"), R-phycoerythrin ("PE"), Texas Red, allophycocyanin, Cy5, Cy7, cascade blue, DAPI ("4',6-diamidino-2-phenylindole") and TRITC ("tetramethylrhodamine isothiocyanate"); combinations of dyes, such as CY5PE, CY7APC, and CY7PE; and synthesized molecules, such as self-assembling nucleic acid structures. Many solutions may be used, such that each solution includes a different type of fluorescent molecule bound to a different ligand.

The foregoing description, for purposes of explanation, used specific nomenclature to provide a thorough understanding of the disclosure. However, it will be apparent to one skilled in the art that the specific details are not required in order to practice the systems and methods described herein. The foregoing descriptions of specific embodiments are presented by way of examples for purposes of illustration and description. They are not intended to be exhaustive of or to limit this disclosure to the precise forms described. Many modifications and variations are possible in view of the above teachings. The embodiments are shown and described in order to best explain the principles of this disclosure and practical applications, to thereby enable others skilled in the art to best utilize this disclosure and various embodiments with various modifications as are suited to the particular use contemplated. The scope of this disclosure is defined by the following claims.

## Claims

1. A system for retrieving a target material from a suspension, the system comprising:
a primary vessel (502, 522) for storing the suspension, the primary vessel (502, 522) having an opening (510, 524);
a collector (100, 120) dimensioned to fit within the opening (510, 524) of the primary vessel (502, 522), the collector (100, 120) comprising a primary body (102, 122) including a first end (104, 124) and an opposing second end (106, 128), the primary body (102, 122) including:
a chamber (112, 138) with an opening at the first end (104,124);
a concave-shaped cavity (108) in the second end (106, 128) that narrows to an apex within the primary body (102, 122); and
a cannula (110, 130) that extends from the apex into the chamber (112, 138), the cannula (110, 130) being in fluid communication with the concave-shaped cavity (108) and extending partially into the chamber (112,138);
a processing vessel (202) having a first open end (212), a second end (214), a flexible cap (216) to close the first open end (212), a re-sealable plug (206) in the second end (214), and a displacement fluid (208) having a density greater than the density of the target material, the processing vessel (202) being adapted to be inserted into the opening of the chamber (112, 138) and the re-sealable plug (206) being adapted to be repeatedly punctured with the cannula (110, 130);
a float (504) to be inserted within the primary vessel (502, 522); and,
a sealing ring (300, 310, 320, 340) to tighten around the primary vessel (505, 522) to collapse the primary vessel (505, 522) inwardly until a seal is formed between the primary vessel (505, 522) and the float (504), the sealing ring (300, 310, 320, 340) creating a force directed toward a central axis (518, 530) of the primary vessel (505, 522) to cause the primary vessel (505, 522) to collapse inwardly.

2. The system of claim 1, wherein the chamber (112, 138) of the collector (100, 120) transitions to a seat located within the interior of the primary body (102, 122) on which the processing vessel (202) may rest, and
the concave-shaped cavity (108) of the collector (100, 120) is in the form of a funnel located within the primary body (102, 122) and having a mouth at the second end (106, 128) that narrows to an apex located in the interior of the primary body (102, 122), the cannula (110, 130) extending from the apex of the funnel into the chamber to allow fluids to pass between the funnel and the chamber.

3. The system of claim 1 or claim 2, wherein the collector (120) further comprises a ridge (132) that protrudes radially and extends circumferentially around the primary body (122).

4. The system of claim 1 or claim 2, wherein the collector (120) further comprises at least one window (126) in the primary body (122) to access at least a portion of the chamber.

5. The system of claim 1 or claim 2, wherein the cannula (110, 130) is a tube or a needle.

6. The system of claim 1 or claim 2, wherein the cannula (110, 130) includes a tapered end that at least partially extends in the chamber (108).

7. The system of claim 3, wherein the opening (510, 524) of the primary vessel (502, 522) comprises an open end to receive the suspension and the collector (100, 120), the system further comprising:
a lock ring to apply to the outside of the primary vessel (505, 522) at the location of the ridge (132) to inhibit movement of the collector (120) relative to the primary vessel (505, 522) when the collector (120) is inserted into the primary vessel (505, 522).

8. The system of claim 1, wherein the displacement fluid (208) is selected from the list comprising an organic solvent, a liquid wax, an oil, a gas, and combinations thereof; olive oil, mineral oil, silicone oil, chill-out liquid wax, paraffin wax, microcrystalline waxes, soy and palm waxes, candle waxes, thermoset waxes, hot melt adhesives, atactic polypropylene and polyolefin compounds, petroleum waxes, dental waxes, animal waxes, vegetable waxes, mineral waxes, petroleum waxes, and synthetic waxes, such as ethylenic polymers, chlorinated naphthalenes or hydrocarbon-type waxes; immersion oil, mineral oil, paraffin oil, silicon oil, fluorosilicone, perfluorodecalin, perfluoroperhydrophenanthrene, perfluorooctylbromide, and combinations thereof; organic solvents such as 1,4-Dioxane, acetonitrile, ethyl acetate, tert-butanol, cyclohexanone, methylene chloride, tert-Amyl alcohol, tert-Butyl methyl ether, butyl acetate, hexanol, nitrobenzene, toluene, octanol, octane, propylene carbonate, tetramethylene sulfones, and ionic liquids; perfluoroketones, such as perfluorocyclopentanone and perfluorocyclohexanone, fluorinated ketones, hydrofluoroethers, hydrofluorocarbons, perfluorocarbons, perfluoropolyethers, silicon and silicon-based liquids, such as phenylmethyl siloxane.

9. The system of claim 1, wherein the float (504) includes a main body, two end caps and one or more support members radially spaced and axially oriented on the main body.

## Patentansprüche

1. System zum Wiedergewinnen eines Zielmaterials aus einer Suspension, wobei das System Folgendes umfasst: ein primäres Gefäß (502, 522) zum Lagern der Suspension, wobei das primäre Gefäß (502, 522) eine Öffnung (510, 524) hat;
einen Kollektor (100, 120), dessen Dimensionen so sind, um in die Öffnung (510, 524) des primären Gefäßes (502, 522) zu passen, wobei der Kollektor (100, 120) einen primären Körper (102, 122) einschließlich eines ersten Endes (104, 124) und eines gegenüberliegenden zweiten Endes (106, 128) umfasst, wobei der primäre Körper (102, 122) Folgendes beinhaltet:
eine Kammer (112, 138) mit einer Öffnung am ersten Ende (104, 124);
einen konkav geformten Hohlraum (108) in dem zweiten Ende (106, 128), der sich zu einer Spitze in dem primären Körper (102, 122) verengt; und
eine Kanüle (110, 130), die sich von der Spitze in die Kammer (112, 138) erstreckt, wobei die Kanüle (110, 130) in Fluidverbindung mit dem konkav geformten Hohlraum (108) ist und sich teilweise in die Kammer (112, 138) erstreckt;
ein Verarbeitungsgefäß (202), das ein erstes offenes Ende (212), ein zweites offenes Ende (214), eine flexible Abdeckung (216), um das erste offene Ende (212) zu verschließen, einen wiederverschließbaren Stopfen (206) in dem zweiten Ende (214) und eine Verdrängungsflüssigkeit (208) hat, die eine Dichte hat, die größer als die Dichte des Zielmaterials ist, wobei das Verarbeitungsgefäß (202) angepasst ist, um in die Öffnung der Kammer (112, 138) eingesetzt zu werden, und der wiederverschließbare Stopfen (206) angepasst ist, um mit der Kanüle (110, 130) wiederholt durchstochen zu werden;
einen Schwebekörper (504), der in das primäre Gefäß (502, 522) eingefügt werden soll; und
einen Dichtungsring (300, 310, 320, 340), um sich um das primäre Gefäß (505, 522) zu verengen, um das primäre Gefäß (505, 522) nach innen einfallen zu lassen, bis eine Dichtung zwischen dem primären Gefäß (505, 522) und dem Schwebekörper (504) gebildet ist, wobei der Dichtungsring (300, 310, 320, 340) eine Kraft erzeugt, die zu einer Mittelachse (518, 530) des primären Gefäßes (505, 522) gerichtet ist, um zu verursachen, dass das primäre Gefäß (505, 522) nach innen einfällt.

2. System nach Anspruch 1, wobei die Kammer (112, 138) des Kollektors (100, 120) zu einer Aufnahme übergeht, die sich in dem Inneren des primären Körpers (102, 122) befindet, auf dem das Verarbeitungsgefäß (202) liegen kann, und
der konkav geformte Hohlraum (108) des Kollektors (100, 120) in der Form eines Trichters ist, der sich in dem primären Körper (102, 122) befindet und eine Mündung an dem zweiten Ende (106, 128) hat, die sich zu einer Spitze verengt, die sich im Inneren des primären Körpers (102, 122) befindet, wobei sich die Kanüle (110, 130) von der Spitze des Trichters in die Kammer erstreckt, um zuzulassen, dass Fluide zwischen dem Trichter und der Kammer passieren.

3. System nach Anspruch 1 oder Anspruch 2, wobei der Kollektor (120) ferner eine Erhöhung (132) umfasst, die radial vorsteht und sich umfangsmäßig um den primären Körper (122) erstreckt.

4. System nach Anspruch 1 oder Anspruch 2, wobei der Kollektor (120) ferner mindestens ein Fenster (126) in dem primären Körper (122) umfasst, um auf mindestens einen Teil der Kammer zuzugreifen.

5. System nach Anspruch 1 oder Anspruch 2, wobei die Kanüle (110, 130) ein Rohr oder eine Nadel ist.

6. System nach Anspruch 1 oder Anspruch 2, wobei die Kanüle (110, 130) ein verjüngtes Ende beinhaltet, das sich mindestens teilweise in die Kammer (108) erstreckt.

7. System nach Anspruch 3, wobei die Öffnung (510, 524) des primären Gefäßes (502, 522) ein offenes Ende umfasst, um die Suspension und den Kollektor (100, 120) zu empfangen, wobei das System ferner Folgendes umfasst:
einen Verschlussring, um ihn an der Außenseite des primären Gefäßes (505, 522) an der Position der Erhöhung (132) zu verwenden, um Bewegung des Kollektors (120) relativ zu dem primären Gefäß (505, 522) zu hemmen, wenn der Kollektor (120) in das primäre Gefäß (505, 522) eingesetzt ist.

8. System nach Anspruch 1, wobei die Verdrängungsflüssigkeit (208) ausgewählt ist aus der Liste bestehend aus einem organischen Lösungsmittel, einem Flüssigwachs, einem Öl, einem Gas und Kombinationen davon; Olivenöl, Mineralöl, Silikonöl, Chill-out Flüssigwachs, Paraffinwachs, mikrokristallinen Wachsen, Soja- und Palmenwachsen, Kerzenwachsen, duroplastischen Wachsen, Schmelzklebestoffen, ataktischen Polypropylen- und Polyolefinverbindungen, Erdölwachsen, Dentalwachsen, tierischen Wachsen, Pflanzenwachsen, Mineralwachsen, Erdölwachsen und synthetischen Wachsen, wie z. B. ethylenischen Polymeren, chlorierten Naphthalinen oder Kohlenwasserstoffwachsen, Immersionsöl, Mineralöl, Paraffinöl, Silikonöl, Fluorsilicon, Perfluordecalin, Perfluorperhydrophenanthren, Perfluoroctylbromid und Kombinationen davon; organischen Lösungsmitteln wie z. B. 1,4-Dioxan, Acetonitril, Ethylacetat, tert-Butanol, Cyclohexanon, Methylenchlorid, tert-Amylalkohol, tert-Butylmethylether, Butylacetat, Hexanol, Nitrobenzol, Toluol, Octanol, Octan, Propylencarbonat, Tetramethylensulfonen und ionischen Flüssigkeiten; Perfluoroketonen wie z. B. Perfluorcyclopentanon und Perfluorcyclohexanon, fluorierten Ketonen, Hydrofluorethern, Fluorkohlenwasserstoffen, Perfluorkohlenstoffen, Perfluorpolyethern, Silicium- und Silicium-basierten Flüssigkeiten, wie z. B. Phenylmethylsiloxan.

9. System nach Anspruch 1, wobei der Schwebekörper (504) einen Hauptkörper, zwei Verschlusskappen und ein oder mehrere Stützelemente beinhaltet, die radial beabstandet und axial an dem Hauptkörper ausgerichtet sind.

## Revendications

1. Système pour récupérer un matériau cible à partir d'une suspension, le système comprenant :
un récipient primaire (502, 522) pour stocker la suspension, le récipient primaire (502, 522) ayant une ouverture (510, 524) ;
un collecteur (100, 120) dimensionné pour aller à l'intérieur de l'ouverture (510, 524) du récipient primaire (502, 522), le collecteur (100, 120) comprenant un corps primaire (102, 122) incluant une première extrémité (104, 124) et une seconde extrémité opposée (106, 128), le corps primaire (102, 122) incluant :
une chambre (112, 138) avec une ouverture à la première extrémité (104, 124) ;
une cavité de forme concave (108) dans la seconde extrémité (106, 128) qui se rétrécit jusqu'à un sommet à l'intérieur du corps primaire (102, 122) ; et
une canule (110, 130) qui s'étend à partir du sommet dans la chambre (112, 138), la canule (110, 130) étant en communication fluidique avec la cavité de forme concave (108) et s'étendant partiellement dans la chambre (112, 138) ;
un récipient de traitement (202) ayant une première extrémité ouverte (212), une seconde extrémité (214), un capuchon flexible (216) pour fermer la première extrémité ouverte (212), un obturateur rescellable (206) dans la seconde extrémité (214), et un fluide de déplacement (208) ayant un densité supérieure à la densité du matériau cible, le récipient de traitement (202) étant adapté pour être inséré dans l'ouverture de la chambre (112, 138) et l'obturateur rescellable (206) étant adapté pour être perforé à plusieurs reprises avec la canule (110, 130) ;
un flotteur (504) destiné à être inséré à l'intérieur du récipient primaire (502, 522) ; et,
une bague de scellage (300, 310, 320, 340) destinée à se serrer autour du récipient primaire (505, 522) pour resserrer le récipient primaire (505, 522) vers l'intérieur jusqu'à ce qu'un scellage soit formé entre le récipient primaire (505, 522) et le flotteur (504), la bague de scellage (300, 310, 320, 340) créant une force dirigée vers un axe central (518, 530) du récipient primaire (505, 522) pour faire en sorte que le récipient primaire (505, 522) se resserre vers l'intérieur.

2. Système selon la revendication 1, dans lequel la chambre (112, 138) du collecteur (100, 120) présente une transition en un appui, situé à l'intérieur de l'intérieur du corps primaire (102, 122), sur lequel le récipient de traitement (202) peut prendre appui, et
la cavité de forme concave (108) du collecteur (100, 120) est en forme d'entonnoir situé à l'intérieur du corps primaire (102, 122) et ayant une embouchure à la seconde extrémité (106, 128) qui se rétrécit jusqu'à un sommet situé dans l'intérieur du corps primaire (102, 122), la canule (110, 130) s'étendant à partir du sommet de l'entonnoir dans la chambre pour permettre à des fluides de passer entre l'entonnoir et la chambre.

3. Système selon la revendication 1 ou la revendication 2, dans lequel le collecteur (120) comprend en outre une saillie (132) qui fait saillie et s'étend circonférentiellement autour du corps primaire (122).

4. Système selon la revendication 1 ou la revendication 2, dans lequel le collecteur (120) comprend en outre au moins une fenêtre (126) dans le corps primaire (122) pour accéder à au moins une portion de la chambre.

5. Système selon la revendication 1 ou la revendication 2, dans lequel la canule (110, 130) est un tube ou une aiguille.

6. Système selon la revendication 1 ou la revendication 2, dans lequel la canule (110, 130) inclut une extrémité tronconique qui s'étend au moins partiellement dans la chambre (108).

7. Système selon la revendication 3, dans lequel l'ouverture (510, 524) du récipient primaire (502, 522) comprend une extrémité ouverte pour recevoir la suspension et le collecteur (100, 120), le système comprenant en outre :
une bague de verrouillage à appliquer sur l'extérieur du récipient primaire (505, 522) à l'emplacement de la saillie (132) pour empêcher le mouvement du collecteur (120) relativement au récipient primaire (505, 522) lorsque le collecteur (120) est inséré dans le récipient primaire (505, 522).

8. Système selon la revendication 1, dans lequel le fluide de déplacement (208) est sélectionné à partir de la liste comprenant : un solvant organique, une cire liquide, une huile, un gaz, et des associations de ceux-ci ; de l'huile d'olive, de l'huile minérale, de l'huile de silicone, de la cire liquide à refroidir, de la cire de paraffine, des cires microcristallines, des cires de soja et de palme, des cires de bougie, des cires thermodurcies, des adhésifs thermofusibles, des composés polypropylène et polyoléfine atactiques, des cires de pétrole, des cires dentaires, des cires animales, des cires végétales, des cires minérales, des cires de pétrole, et des cires synthétiques, telles que des polymères éthyléniques, des naphtalènes chlorés ou des cires de type hydrocarbure ; des huiles à immersion, de l'huile minérale, de l'huile de paraffine, de l'huile de silicium, de la fluorosilicone, de la perfluorodécaline, du perfluoroperhydrophénanthrène, du perfluorooctylbromure, et des associations de ceux-ci ; des solvants organiques tels que du 1,4-dioxane, de l'acétonitrile, de l'acétate d'éthyle, du tert-butanol, du cyclohexanone, du chlorure de méthylène, de l'alcool tert-amylique, de l'éther méthylique tert-butylique, de l'acétate de butyle, de l'hexanol, du nitrobenzène, du toluène, de l'octanol, de l'octane, du carbonate de propylène, des sulfones de tétraméthylène, et des liquides ioniques ; des perfluorocétones, telles que du perfluorocyclopentanone et du perfluorocyclohexanone, des cétones fluorées, des hydrofluoroéthers, des hydrofluorocarbones, des perfluorocarbones, des perfluoropolyéthers, des liquides de silicium et à base de silicium, tels que du phénylméthylsiloxane.

9. Système selon la revendication 1, dans lequel le flotteur (504) inclut un corps principal, deux capuchons d'extrémité et un ou plusieurs éléments de support espacés radialement et orientés axialement sur le corps principal.
